Europäisches Patentamt

(19) European Patent Office

Office européen des brevets

(11) Veröffentlichungsnummer: **0 236 814**

**A1**

(12) **EUROPÄISCHE PATENTANMELDUNG**

(21) Anmeldenummer: 87102352.9

(22) Anmeldetag: 19.02.87

(51) Int. Cl.³: **B 23 Q 3/00**
**B 23 Q 1/28**

(30) Priorität: 01.03.86 DE 3606795

(43) Veröffentlichungstag der Anmeldung:
16.09.87 Patentblatt 87/38

(84) Benannte Vertragsstaaten:
AT BE CH DE FR GB IT LI SE

(71) Anmelder: Josef Scheppach Maschinenfabrik GmbH &
Co.
Günzburger Strasse 69
D-8873 Ichenhausen(DE)

(72) Erfinder: Scheppach, Fritz
Dr.-Beer-Strasse 5
D-8873 Ichenhausen(DE)

(74) Vertreter: Munk, Ludwig, Dipl.-Ing.
Patentanwalt Prinzregentenstrasse 1
D-8900 Augsburg(DE)

(54) Vorrichtung zum Verstellen eines Werkstückanschlags oder dergleichen für eine Holzbearbeitungsmaschine.

(57) Bei einer Vorrichtung zum Verstellen eines dem Auflagetisch (1) einer Kreissäge zugeordneten Längsanschlag (2)
mit einem diesen aufnehmenden Träger (3) und einem
mittels einer Stellspindel (8) hiermit verbundenen Halter (9),
bei der der Träger (3) und der Halter (9) entland einer im
Bereich einer Kante des Auflagetisches (1) vorgesehenen
Führung (6) verstellbar und gegenüber dieser unabhängig
voneinander festlegbar sind, werden dadurch ein kompakter
Aufbau sowie eine einfache Bedienbarkeit und eine leichte
An- und Abbaubarkeit erreicht, daß der Halter (9) und der
Träger (3) mit gegenseitiger Verschiebbarkeit in Längsrichtung der Stellspindel (8) und mit gegenseitiger Abstützung
quer hierzu aufeinander aufgenommen sind und daß der
Halter (8) mit mindestens einem axial verschiebbar angeordneten, unter der Wirkung einer auf ihm abgestützten Feder
(27) tischseitig über die der tischseitigen Führung (6) zugewandte Stützfläche (4) des Trägers (3) ausfahrbaren Distanzbolzen (26) sowie mindestens einem axial verschiebbar
angeordneten Spannstift (16) versehen ist, det mit seinem
einen Ende an einer in der tischseitigen Führung (6) verschiebbar angeordneten und in Richtung des Spannstifts (16)
abstützbaren Spannbacke (17) befestigt ist und an dessen
anderem Ende ein am Halter (9) Betätigungselement (19)
angreift.

FIG 1

Croydon Printing Company Ltd.

Vorrichtung zum Verstellen eines Werkstückanschlags oder dergleichen für eine Holzbearbeitungsmaschine

Die Erfindung betrifft eine Vorrichtung zum Verstellen eines einem Auflagetisch einer Holzbearbeitungsmaschine, insbesodnere einer Kreissäge zugeordneten Werk- stückanschlags, insbesondere Längsanschlags.oder dergleichen, mit einem den Werkstückanschlag oder dergleichen aufnehmenden Träger und einem mittels einer Stellspindel hiermit verbundenen Halter, wobei Träger und Halter entlang einer im Bereich einer Kante des Auflagetisches vorgesehenen Führung verstellbar und gegenüber dieser unabhängig voneinander feststellbar sind.

Der Halter dient dabei im festgestellten Zustand als Gegenlager für die Stellspindel, mittels der eine Feineinstellung des Werkstückanschlags oder dergleichen durchgeführt werden kann. Bei der Grobeinstellung werden der Anschlagträger und der Halter gleichzeitig verschoben. Bei den bekannten Anordnungen eingangs erwähnter Art sind der Anschlagträger und der Halter als nebeneinander angeordnete, durch die Stellspindel voneinander distanzierte Bauteile ausgebildet. Dies ergibt eine sehr sperrige Bauweise, bei der die Länge der Führung und damit die entsprechende Breite des Auflagetisches nicht voll ausgenutzt werden können, da sich der Abstand zwischen Träger und Halter sowie die Breite des Halters selbst als Totraum erweisen. Ein weiterer Nachteil ist in der vergleichsweise umständlichen Bedienung zu sehen, die daraus resultiert, daß hier sowohl der Halter als auch der Anschlagträger eigene Spannvorrichtungen benötigen, die separat voneinander betätigt werden müssen. Außerdem lassen sich die beiden, durch die Stellspindel voneinander distanzierten Teile nur sehr schwierig außer und vor allem in Eingriff mit der tischseitigen Führung bringen, was sich ungünstig auf die An- und Abbaubarkeit des Werkstückanschlags und damit insgesamt auf die Bedienungsfreundlichkeit auswirkt.

Hiervon ausgehend ist es daher die Aufgabe der vorliegenden Erfindung, eine Vorrichtung eingangs erwähnter Art mit einfachen und kostengünstigen Mitteln so zu verbessern, daß ein kompakter Aufbau, ein leichter An- und Abbau sowie eine einfache Bedienbarkeit gewährleistet sind.

Diese Aufgabe wird erfindungsgemäß dadurch gelöst, daß der Halter und der Träger mit gegenseitiger Verschiebbarkeit in Längsrichtung der Stellspindel und mit gegenseitiger Abstützung quer hierzu aufeinander aufgenommen sind und daß der Halter mit mindestens einem axial verschiebbar angeordneten, unter der Wirkung einer auf ihm abgestützten Feder tischseitig über die der tischseitigen Führung zugewandte Stützfläche des Trägers ausfahrbaren Distanzbolzen sowie mindestens einem axial verschiebbar angeordneten Spannstift versehen ist, der mit seinem einen Ende an einer in der tischseitigen Führung verschiebbar angeordneten und in Richtung des Spannstifts abgestützten Spannbacke befestigt ist und an dessen anderem Ende ein am Halter abstützbares, außerhalb des Trägers angeordnetes Betätigungselement angreift.

Mit diesen Maßnahmen werden die Nachteile der bekannten Anordnungen vollständig beseitigt. Dadurch, daß der Halter und der Träger aufeinander angeordnet sind, ergeben sich nicht nur eine kompakte Bauweise, sondern auch eine einfache Handhabung und Bedienbarkeit. Die führungsseitige Festlegung sowohl des Halters als auch des Trägers kann hier in vorteilhafter Weise mit ein und demselben Betätigungselement erfolgen. Beim Abnehmen bzw. Anbringen des Werkstückanschlags ist lediglich die eine Spannbacke in bzw. außer Eingriff mit der tischseitigen Führung zu bringen. Da der Halter und der Träger aufeinander angeordnet sind, läßt sich letzterer in vorteilhafter Weise auch ohne Beeinträchtigung der Feinverstellbarkeit bis zum Rand des Auflagetisches verschieben, so daß dessen Breite vollständig ausgenutzt werden kann. Die mit der Erfindung erzielbaren Vorteile sind dementsprechend nicht nur in einer ausgezeichneten Bedienungsfreundlichkeit der Stellvorrichtung, sondern auch in einer Steigerung der erreichbaren Schnittbreite etc. und damit insgesamt in einer ausgezeichneten Wirtschaftlichkeit zu sehen.

In vorteilhafter Weiterbildung der übergeordneten Maßnahmen kann der Halter als mit einer der Stellspindel zugeordneten Gewindebohrung versehener Klotz ausgebildet sein, wobei der Träger eine diesen Klotz mit Schiebepassung aufnehmende Kammer aufweisen.kann, deren zur Stellspindel parallele Seitenwandungen mit vom Distanzbolzen bzw. vom Spannstift durchgriffenen Langlöchern versehen und durch mindestens eine die Stellspindel abstützende Stirnwand miteinander verbunden sind. Diese Maßnahmen ergeben eine einfache und kompakte Anordnung mit einer höchst einfachen gegenseitigen Führung von Träger und Halter.

In Weiterbildung dieses Gedankens kann der Träger ein den Halter enthaltendes, haubenförmiges, nach oben geschlossenes Gehäuse aufweisen. Hierbei ergibt sich in vorteilhafter Weise eine praktisch verschmutzungssichere Abdeckung des Halters, was sich vorteilhaft auf die Wartungsfreiheit der erfindungsgemäßen Anordnung auswirkt.

Eine weitere zweckmäßige Maßnahme kann darin bestehen, daß der unter der Wirkung der zugeordneten Feder ausführbare Hub des Distanzbolzen durch einen Endanschlag begrenzt ist. Diese Maßnahme vereinfacht in vorteilhafter Weise die Grobverstellung, da der am Anschlag angelaufene Distanzbolzen auf einfache Weise durch entsprechende Freigabe des Spannstifts vollständig außer Eingriff mit der führungsseitigen Anlagefläche gebracht werden kann.

In weiterer Fortbildung der übergeordneten Maßnahmen kann der den Halter bildende Klotz eine im Bereich ihres tischseitigen Endes abgestufte Durchgangsausnehmung für den mit einem rückwärtigen Bund versehenen Distanzbolzen und die hieran angreifende Feder aufweisen, die an einem rückwärtigen Flanschdeckel abgestützt ist. Die Abstufung der Durchgangsausnehmung wirkt mit dem Bund des Distanzbolzens zur Bildung eines Endanschlags zusammen. Der nachträglich aufsetzbare Flanschdeckel gewährleistet eine einfache Montage des mit einem Bund versehenen Distanzbolzens, so daß sich insgesamt ein einfacher Aufbau ergibt.

Eine weitere, ganz besonders vorteilhafte Ausführung der übergeordneten Maßnahmen kann darin bestehen, daß der Spannstift den Distanzbolzen sowie die hieran angreifende, als Schraubendruckfeder ausgebildete Feder und den Flanschdeckel etwa koaxial durchsetzt, wobei der Flanschdeckel ebenso wie der Distanzbolzen ein zugeordnetes Langloch der benachbarten Wandung des Trägers durchgreift, so daß das dem Spannstift zugeordnete Betätigungselement hieran abgestützt sein kann. Im Bereich der führungsparallelen Wandungen des Trägers wird hierbei in vorteilhafter Weise jeweils nur ein Langloch benötigt, das eine Relativbewegung des Trägers sowohl gegenüber dem Spannstift als auch dem Distanzbolzen ermöglicht.

In weiterer Fortbildung der übergeordneten Maßnahmen kann das dem Spannstift zugeordnete Betätigungsorgan als mit einem Griff versehene Mutter ausgebildet sein, die im Eingriff mit einem an den Spannstift angeformten Gewinde ist. Diese Maßnahmen ergeben eine einfache und kostengünstige Ausführung der Spanneinrichtung und gewährleisten eine einfache und sinnfällige Betätigung.

In weiterer Fortbildung der übergeordneten Maßnahmen kann die Spannbacke als Flachschienenabschnitt ausgebildet sein, deren Querschnitt gegenüber dem Hohlquerschnitt der als Hohlprofilschiene ausgebildeten Führung Untermaß besitzt. Hierdurch ergibt sich bei höchst einfachem Aufbau eine leichte Verschiebbarkeit.

Weitere zweckmäßige Fortbildungen und vorteilhafte Ausgestaltungen der übergeordneten Maßnahmen ergeben sich aus der nachstehenden Beschreibung eines Ausführungsbeispiels anhand der Zeichnung in Verbindung mit den restlichen Unteransprüchen.

In der Zeichnung zeigen:

Figur 1     eine Draufsicht auf den mit einem Werkstücklängsanschlag versehenen Auflagetisch einer Kreissäge,

Figur 2     eine Seitenansicht der Anordnung gemäß Figur 1 teilweise im Schnitt mit grobeinstellbarem Längsanschlag,

Figur 3     die Anordnung gemäß Figur 2 mit feineinstellbarem Längsanschlag und

Figur 4     die Anordnung gemäß Fig. 2 und 3 mit gespanntem Längsanschlag.

Der Aufbau und die Wirkungsweise einer Holzkreissäge sind an sich bekannt und bedürfen daher im vorliegenden Zusammenhang keiner näheren Erläuterung mehr. Beim Längsschneiden von Werkstücken werden diese auf den von einem Sägenblatt durchgriffenen, auf Standbeinen oder einem Gestellkasten aufgenommenen Auflagetisch 1 aufgelegt und mit einer abgerichteten Seitenkante an einen Längsanschlag 2 angelegt. Der etwa durch eine Winkelschiene etc. gebildete Längsanschlag 2 ist an einem zugeordneten Träger 3 befestigt, der mit einer rechtwinklig zur Anlegefläche des Längsanschlags 2 verlaufenden Stützfläche 4 versehen ist, die zur Ausrichtung des Längsanschlags 2 zur Anlage an einer zugeordneten Führungsfläche 5 einer im Bereich der hinteren Tischkante verlaufenden Führungsschiene 6 bringbar und hiermit verspannbar ist.

Der Längsanschlag 2 ist zur Einstellung der gewünschten Werkstückbreite über der Breite des Auflagetisches 1 verstellbar. Die Einstellung kann dabei in zwei Stufen erfolgen, nämlich in Form einer Grobeinstellung und einer Feineinstellung. Die Grobeinstellung erfolgt einfach durch Verschieben des Trägers 3 von Hand. Die Feineinstellung erfolgt durch Drehen einer mit einem Handknopf 7 versehenen, parallel zur Führungsschiene 6 verlaufenden Stellspindel 8, über die der Träger 3 mit einem bei der Grobeinstellung zusammen mit ihm verschiebbaren, zur Bewerkstelligung der Feineinstellung jedoch unabhängig von ihm gegenüber der Führungsschiene 6 blockierbaren Halter 9 verbunden ist.

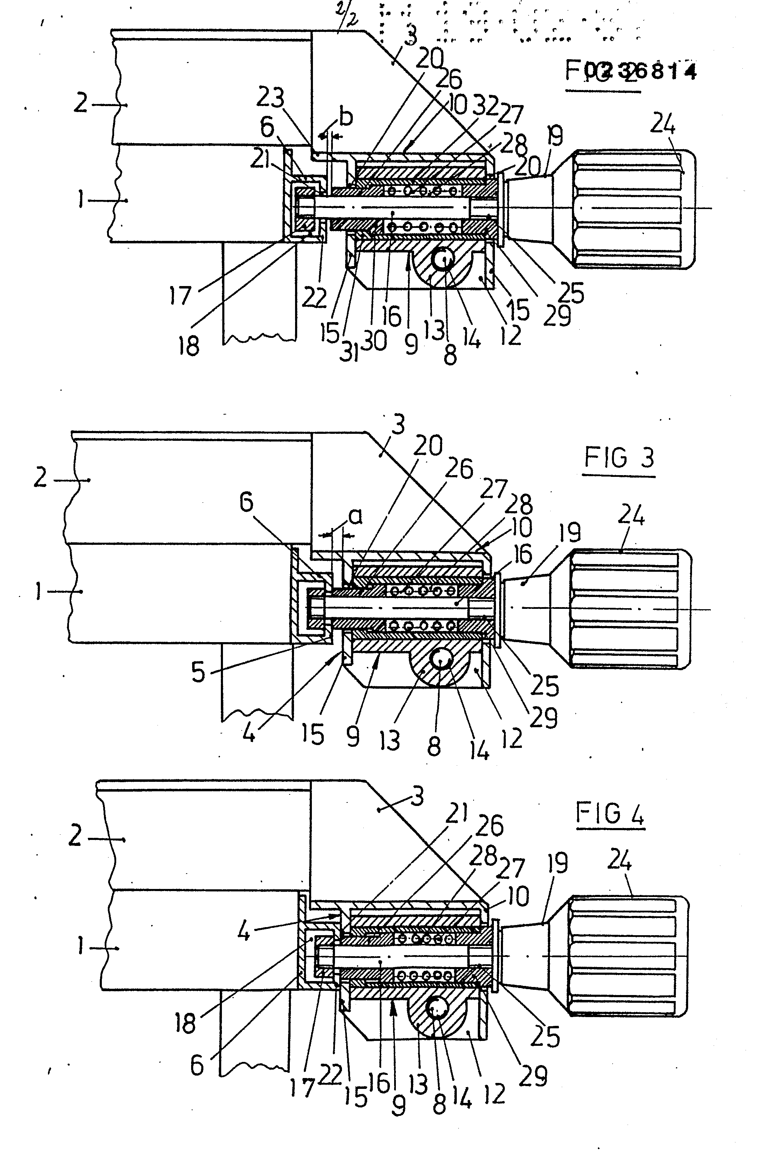

Der Träger 3 und der Halter 9 sind zur Gewährleistung einer kompakten Bauform und einer einfachen Handhabung aufeinander angeordnet. Hierzu besitzt der Träger 3 ein seinen parallel zur Führungsschiene 6 verlaufenden Schenkel bildendes, nach oben geschlossenes, haubenförmiges Gehäuse 10, in welchem der Halter 9 untergebracht ist. Die Stellspindel 8 ist an einer zur Führungsschiene 6 lotrechten Stirnseite dieses Gehäuses 10 beidseitig axial abgestützt und befindet sich in Gewindeeingriff mit dem Halter 9. Zur Gewährleistung einer hochgenauen Feineinstellung des Längsanschlags 2 kann im Bereich der axialen Abstützung der Stellspindel 8 eine Noniusskala 11 vorgesehen sein. Der Halter 9 ist hier als etwa quaderförmiger Klotz ausgebildet, der in einer nach unten offenen Kammer 12 des haubenförmigen Gehäuses 10 angeordnet ist, wobei die zur Stellspindel 8 rechtwinklige Kantenlänge dieses Klotzes der lichten Weite der Kammer 12 entspricht, so daß sich eine einfache gegenseitige Führung von Träger 3 und Halter 9 in Längsrichtung der Stellspindel 8 ergibt. Die gegenseitige Passung ist dementsprechend als Verschiebepassung ausgebildet. Der den Halter 9 bildende quaderförmige Klotz kann von der Stellspindel 8 einfach durchsetzt sein. Im dargestellten Ausführungsbeispiel ist dieser Klotz, wie am besten den Figuren 2 bis 4 entnehmbar ist, mit einem im Bereich seiner unteren Fläche ohrenförmig angesetzten Verstärkung 13 versehen, die mit einer der Stellspindel 8 zugeordneten Gewindebohrung 14 versehen ist.

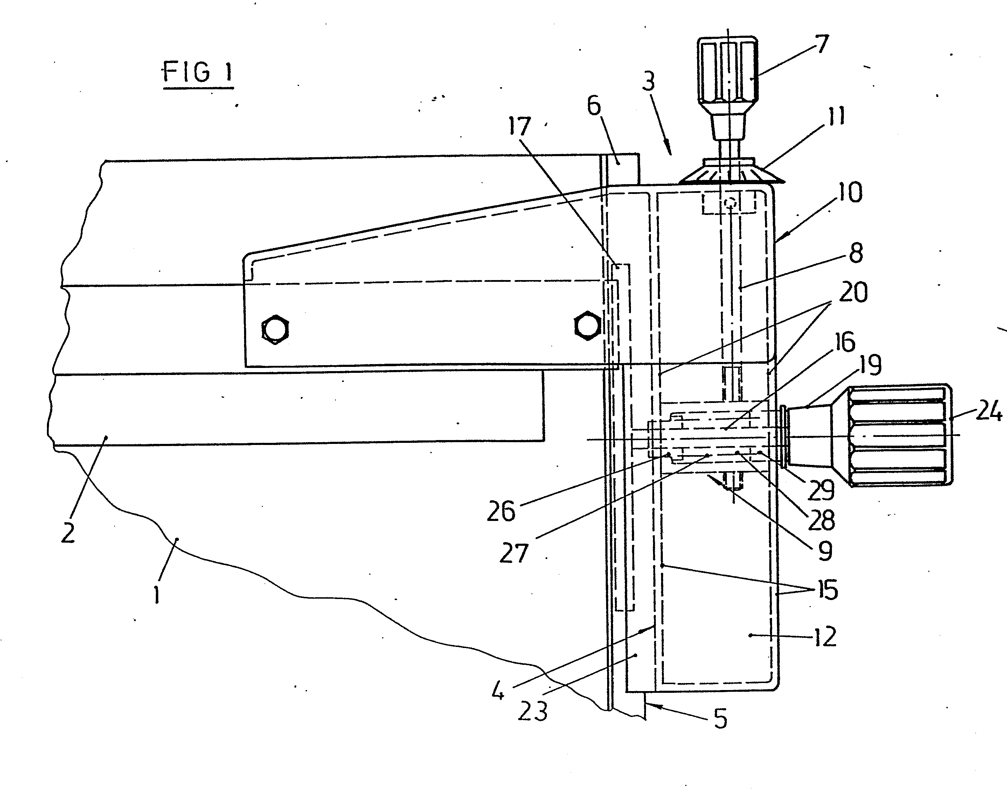

Der den Halter 9 bildende Klotz ist, wie den Figuren 2 bis 4 weiter entnommen werden kann, von einem in axialer Richtung verschiebbar angeordneten, mit seinen Enden die Seitenwandungen 15 des haubenförmigen Gehäuses 10 durchgreifenden Spannstift 16 durchgriffen, der mit seinem tischseitigen Ende an einer Spannbacke 17 angreift, die in einen hinterschnittenen Führungskanal 18 der Führungsschiene 6 mit Verschiebespiel eingelegt ist, und der mit seinem anderen Ende mit einem am Halter 9 abgestützten, außerhalb des Gehäuses 10 des Trägers 3 angeordneten Betätigungselement 19 zusammenwirkt. Das Gehäuse 10 des Trägers 3 ist im Bereich seiner stellspindelparallelen Seitenwandungen 15 mit in Richtung der Stellspindel 8 sich erstreckenden Langlöchern 20 versehen, durch welche der Spannstift 16 beidseitig aus dem Gehäuse 10 herausgeführt ist. Die Spannbacke 17 ist, wie am besten aus Figur 1 erkennbar ist. als Flachschienenabschnitt ausgebildet, dessen Querschnitt, wie die Figuren 2 bis 4 erkennen lassen, gegenüber dem Innenquerschnitt des Hohlkanals 18 der Führungsschiene 6 zur Gewährleistung einer leichten Beweglichkeit in Richtung der Stellspindel 8 Untermaß besitzt. Zur Durchführung des Spannstifts 16 ist die vom Auflagetisch 1 abgewandte Wandung der die Führungsschiene 6 bildenden Hohlprofilschiene mit einem in Richtung der Stellspindel 8 durchgehenden Schlitz 21 versehen, so daß sich praktisch zwei diesen Schlitz begrenzende, die Spannbacke 17 abstützende Leisten 22 ergeben. Die Führungsschiene 6 ist im Querschnitt b-förmig ausgebildet, so daß sich oberhalb des den Hohlkanal 18 enthaltenden Bereichs eine Nische ergibt, in die der Träger 3 mit einer an den oberen Bereich des Gehäuses 10 angesetzten Deckleiste 23 eingreift, wodurch die gegenseitigen Anlageflächen 4 bzw. 5 des Halters 3 und der Führungsschiene 6 gegen Verschmutzung gesichert sind.

Die dem Spannstift 16 zugeordnete Betätigungseinrichtung kann etwa als Spannexzenter ausgebildet sein. Im dargestellten Ausführungsbeispiel ist das Betätigungselement 18 als mit einem Handknopf 24 versehene Mutter ausgebildet, die im Eingriff mit einem an den Spannstift 16 angeformten Gewinde 25 ist. Durch Anziehen der mit dem Spannstift 16 zusammenwirkenden Mutter wird der Halter 3 und mit diesem der Träger 9 an die führungsseitige Anlagefläche 5 herangeholt und bei entsprechend festem Anzug der das Betätigungselement 18 bildenden Mutter durch Klemmverbindung an der Führungsschiene 6 festgelegt. Die den Schlitz 21 begrenzenden Leisten 22 sind dabei zwischen der Spannbacke 17 und der führungsseitigen Seitenwand 15 des halterseitigen Gehäuses 10 reibschlüssig eingespannt. Eine derartige Stellung liegt der Figur 4 zugrunde. In dieser Spannstellung kann die Stellspindel 8 infolge Blockierung des Halters 9 durch den Spannstift 16 nicht betätigt werden. Die der Figur 4 zugrundeliegende Situation liegt daher in der Spannstellung vor, in der der Längsanschlag 2 seine endgültige Einstellung hat.

Um zur vorhergehenden Feineinstellung des Längsanschlags 2 den diesen aufnehmenden Träger 3 bei gegenüber der Führungsschiene 6 noch blockiertem Halter 9 freigeben zu können, ist der Halter 9 mit einem axial verschiebbar angeordneten, zum Spannstift 16 parallelen Distanzbolzen 26 versehen, der durch eine ihn hintergreifende, auf dem Halter 9 abgestützte Druckfeder 27 aus einer zugeordneten Ausnehmung 28 des Halters 9 ausfahrbar ist. Die Länge des Distanzbolzens 26 ist so bemessen, daß dieser mit seiner in Ausschubrichtung vorderen Stirnfläche über die der Führungsschiene 6 zugewandte Seitenwandung 15 des trägerseitigen Gehäuses 10, die mit einem zugeordneten Langloch versehen ist, ausfahrbar ist. In der der Figur 4 zugrundeliegenden Stellung ist der Distanzbolzen durch die vom Spannstift 16 ausgeübte Kraft entgegen der Wirkung der Feder 27 so weit in die zugeordnete Ausnehmung 28 eingefahren, daß seine vordere Stirnfläche mit der führungsseitigen Anlagefläche 4 des trägerseitigen Gehäuses 10 fluchtet. Wenn nun die das Betätigungselement 19 bildende Mutter leicht zurückgedreht wird, wird der Distanzbolzen 26 durch die Feder 27 um das dieser Verlängerung des Spannstifts 16 entsprechende Maß ausgeschoben, wodurch das gegenüber dem Halter 9 abgestützte, trägerseitige Gehäuse 10 um ein entsprechendes Maß von der Führungsschiene 6 distanziert wird. Eine derartige Stellung liegt der Figur 3 zugrunde. Die durch den Distanzbolzen 26 bewirkte Distanzierung der führungsseitigen Anlagefläche 4 von der führungsseitigen Anlagefläche 5 ist dabei bei a angedeutet. Zur Freigabe des trägerseitigen Gehäuses 10 genügt es, wenn das Maß a im Bereich von 0,5 bis 1,0 mm liegt, was durch eine leichte Drehung der das Betätigungselement 19 bildenden Mutter bewirkt werden kann. In dieser Stellung liegt nun noch der Distanzbolzen 26 mit seiner vorderen Stirnfläche an der führungsseitigen Anlagefläche 5 an. Aus diesem Grund ist daher lediglich der den Distanzbolzen 26 enthaltende Halter 9 blockiert. Der Träger 3, der im Bereich des Gehäuses 10 mit Langlöchern für die ihn durchsetzenden Elemente versehen ist, ist gegenüber der Führungsschiene 6 frei und kann daher mittels der Stellspindel 8 zur Bewerkstelligung einer Feineinstellung bewegt werden.

Der Ausfährweg des Distanzbolzen 26 ist durch einen Endanschlag begrenzt. Sofern die mit dem Spannstift 16 zusammenwirkende, das Betätigungselement 19 bildende Mutter gegenüber der der Figur 3 zugrundeliegenden Stellung weiter zurückgedreht wird, läuft der Distanzbolzen 26 an diesem Endanschlag an. Die Längenvergrößerung des Spannstifts 16 wird daher durch keine weitere Ausschubbewegung des Distanzbolzens 26 mehr ausgeglichen, was bewirkt, daß bei entsprechender Drehung der das Betätigungselement 19 bildenden Mutter die Pressung zwischen der vorderen Stirnfläche des Distanzbolzen 26 und der zugeordneten Anlagefläche 5 der Führungsschiene 6 aufgehoben und damit auch der Halter 9 gegenüber der Führungsschiene 6 freigegeben wird. Diese Stellung liegt der Figur 2 zugrunde. In dieser Stellung kann der Träger 3 samt hierauf aufgenommenem Halter 9 zur Grobeinstellung des Längsanschlags 2 entlang der Führungsschiene 6 verschoben werden.

Die dem Distanzbolzen 26 zugeordnete Ausnehmung 28 des Halters 9 ist, wie die Figuren 2 bis 4 weiter erkennen lassen, als Durchgangsbohrung ausgebildet, die rückwärtig durch einen Flanschdeckel 29 verschlossen ist, der mit einem die Feder 27 abstützenden Zentrieransatz versehen ist. Die die Ausnehmung 28 bildende Durchgangsbohrung ist im Bereich ihres distanzbolzenseitigen Endes zur Bildung des dem Distanzbolzen 26 zugeordneten Endanschlags nach radial innen stufig abgesetzt. Der Distanzbolzen 26 ist mit einem rückwärtigen Bund 30 versehen, der in der Stellung gemäß Figur 2 an der bohrungsseitigen Stufe 31 anliegt. Der Durchmesser des Bunds 30 entspricht etwa dem Durchmesser des Zentrieransatzes des Flanschdeckels 29 abzüglich eines Bewegungsspiels. Der Distanzbolzen 26 sowie die als Schraubendruckfeder ausgebildete Feder 27 können daher über die von dem nachträglich ansetzbaren Flanschdeckel 29 verschließbare Öffnung montiert

- 13 -

werden. Die Ausnehmung 28 kann direkt in den den Halter 9 bildenden Klotz eingearbeitet sein. Im dargestellten Ausführungsbeispiel ist dieser Klotz zur Vereinfachung der Herstellung mit einer durchgehenden Büchse 32 versehen, die die Ausnehmung 28 enthält.

Der Spannstift 16 kann parallel neben dem bzw. ober- oder unterhalb des Distanzbolzens 26 angeordnet und durch ihm zugeordnete Ausnehmungen des Halters 9 sowie ihm zugeordnete Langlöcher des trägerseitigen Gehäuses 10 hindurchgreifen. Im dargestellten Ausführungsbeispiel ist der Spannstift 16 zur Bewerkstelligung einer besonders einfachen und kompakten Anordnung sowie einer hohen Einstellgenauigkeit koaxial zum Distanzbolzen 26 angeordnet. Dieser ist dementsprechend als mit einer vom Spannstift 16 durchsetzten Bohrung versehene Büchse ausgebildet. Dasselbe gilt für den Flanschdeckel 29. Die als Schraubendruckfeder ausgebildete Feder 27 ist um den Spannstift 16 herumgelegt. Die mit dem Spannstift 16 zusammenwirkende, das Betätigungselement 19 bildende Mutter kann sich dabei einfach am Flanschdeckel 29 abstützen, der in ein zugeordnetes Langloch 20 des trägerseitigen Gehäuess 10 eingreift. Die dem Distanzbolzen 26 bzw. dem Flanschdeckel 29 zugeordneten Langlöcher 20 des trägerseitigen Gehäuses 10 dienen in diesem Falle gleichzeitig als trägerseitiger Durchlaß für den Spannstift 16. Die Büchse 32 kann dabei vorteilhaft mit Schiebesitz in eine zugeordnete Durchgangsbohrung des den Halter bildenden Klotzes eingesetzt und liegt rückwärtig am Flanschdeckel 29 an, dessen Durchmesser höchstens dem Durchmesser der Büchse 32 entspricht. Hierdurch ist sichergestellt, daß mittels des Betätigungselements 19 nur die Büchse 32 und nicht der gesamte Klotz

- 14 -

gegen das Gehäuse 10 gepreßt wird, was zur Freihaltung der am Klotz angreifenden Stellspindel 8 von Biegebeanspruchungen beiträgt.

Vorstehend ist zwar ein besonders bevorzugtes Ausführungsbeispiel der Erfindung näher erläutert, ohne daß jedoch hiermit eine Beschränkung verbunden sein soll. Vielmehr stehen dem Fachmann eine Reihe von Möglichkeiten zur Verfügung, um den allgemeinen Gedanken der Erfindung an die Verhältnisse des Einzelfalls anzupassen. So wäre es beispielsweise auch ohne weiteres möglich, zwei parallel zueinander angeordnete Distanzbolzen vorzusehen und im Falle eines separat hiervon angeordneten Spannstifts diesen zwischen den beiden Distanzbolzen anzuordnen.

Patentansprüche

1. Vorrichtung zum Verstellen eines einem Auflagetisch (1) einer Holzbearbeitungsmaschine, insbesondere einer Kreissäge, zugeordneten Werkstückanschlags, insbesondere Längsanschlags, oder dergleichen, mit einem den Werkstückanschlag oder dergleichen aufnehmenden Träger (3) und einem mittels einer Stellspindel (8) hiermit verbundenen Halter (9), wobei Träger (3) und Halter (9) entlang einer im Bereich einer Kante des Auflagetisches (1) vorgesehenen Führung (6) verstellbar und gegenüber dieser unabhängig voneinander festlegbar sind; dadurch gekennzeichnet, daß der Halter (9) und der Träger (3) mit gegenseitiger Verschiebbarkeit in Längsrichtung der Stellspindel (8) und mit gegenseitiger Abstützung quer hierzu aufeinander aufgenommen sind und daß der Halter (9) mit mindestens einem axial verschiebbar angeordneten, unter der Wirkung einer auf ihm abgestützten Feder (27) tischseitig über die der tisch seitigen Führung (6) zugewandte Stützfläche (4) des Trägers (3) ausfahrbaren Distanzbolzen (26) sowie mindestens einem axial verschiebbar angeordneten Spannstift (16) versehen ist, der mit seinem einen Ende an einer in der tischseitigen Führung (6) verschiebbar angeordneten und in Richtung des Spannstifts (16) abgestützten Spannbacke (17) befestigt ist und an dessen anderem Ende ein am Halter (9) abstützbares, außerhalb des Trägers (3) angeordnetes Betätigungselement (19) angreift.

2. Vorrichtung nach Anspruch 1, dadurch gekennzeichnet, daß der Halter (9) als mit einer der Stellspindel (8) zugeordneten Gewindebohrung (14) versehener Klotz ausgebildet ist und daß der Träger (3) eine diesen Klotz mit Schiebepassung aufnehmende Kammer (12) aufweist, deren zur Stellspindel (8) parallele Seitenwandungen (15) mit vom Distanzbolzen (26) bzw. Spannstift (16) durchgriffenen Langlöchern (20) versehen und durch mindestens eine, die Stellspindel (8) abstützende Stirnwand miteinander verbunden sind.

3. Vorrichtung nach Anspruch 2, dadurch gekennzeichnet, daß der Träger (3) ein den Halter (9) enthaltendes, haubenförmiges, nach oben geschlossenes Gehäuse (10) aufweist.

4. Vorrichtung nach einem der vorhergehenden Ansprüche, dadurch gekennzeichnet, daß der unter der Wirkung der zugeordneten Feder (27) ausführbare Hub des Distanzbolzens (26) durch einen Endanschlag begrenzt ist.

5. Vorrichtung nach einem der vorhergehenden Ansprüche, dadurch gekennzeichnet, daß der Spannstift (16) in einer den den Halter (9) bildenden Klotz durchsetzenden Büchse (32) verläuft, die mittels des Betätigungsorgans (19) gegenüber dem Klotz verschiebbar ist.

6. Vorrichtung nach einem der vorhergehenden Ansprüche, dadurch gekennzeichnet, daß die dem Distanzbolzen zugeordnete Ausnehmung (28) als durch einen rückwärtigen Flanschdeckel (29) verschließbare Durchgangsausnehmung ausgebildet ist, die im Bereich ihres tischseitigen Endes eine nach radial innen vorspringende Stufe (31) aufweist, der ein rückwärtiger Bund (30) des Distanzbolzens (26) zugeordnet ist, wobei vorzugsweise in den den Halter (9) bildenden Klotz eine vorzugsweise verschiebbare, am Flanschdeckel (29) einerseits und am Gehäuse (10) andererseits anliegende Büchse (32) eingesetzt ist, die die Ausnehmung (28) enthält.

7. Vorrichtung nach einem der vorhergehenden Ansprüche, dadurch gekennzeichnet, daß der Spannstift (16) den Distanzbolzen (26), die vorzugsweise als Schraubendruckfeder ausgebildete Feder (27) und den Flanschdeckel (29) vorzugsweise koaxial durchsetzt, der ebenso wie der Distanzbolzen (26) in ein zugeordnetes Langloch (20) der benachbarten Wandung (15) des Trägers (3) eingreift und an dem das Betätigungselement (19) abgestützt ist.

8. Vorrichtung nach einem der vorhergehenden Ansprüche, dadurch gekennzeichnet, daß das Betätigungsorgan (19) als mit einem Griff (24) versehene Mutter ausgebildet ist, die im Eingriff mit einem an den Spannstift (16) angeformten Gewinde (25) ist.

9. Vorrichtung nach einem der vorhergehenden Ansprüche, dadurch gekennzeichnet, daß die tischseitige Führung (6) als Hohlprofilschiene ausgebildet ist, die trägerseitig einen durch hinterschnittene, die Spannbacke (17) abstützende Leisten (22) begrenzten Schlitz (21) aufweist, durch den der Spannstift (16) hindurchgreift.

10. Vorrichtung nach einem der vorhergehenden Ansprüche, dadurch gekennzeichnet, daß die Spannbacke (17) als Flachschienenabschnitt ausgebildet ist, dessen Querschnitt gegenüber dem Innenquerschnitt der vorzugsweise als Hohlprofilschiene ausgebildeten Führung (6) Untermaß besitzt.

FIG 1

FIG 3

FIG 4

Europäisches
Patentamt

**EUROPÄISCHER RECHERCHENBERICHT**

Nummer der Anmeldung **0236814**

EP 87 10 2352

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US-A-2 273 715 (LONSKEY) | 1-3,8-10 | B 23 Q 3/00 B 23 Q 1/28 |
| | --- | | |
| A | FR-A-2 393 649 (CELLIER) | 1 | |
| | ----- | | |

| RECHERCHIERTE SACHGEBIETE (Int. Cl.4) |
|---|
| B 23 Q |

Der vorliegende Recherchenbericht wurde für alle Patentansprüche erstellt.

| Recherchenort | Abschlußdatum der Recherche | Prüfer |
|---|---|---|
| DEN HAAG | 05-06-1987 | DE GUSSEM J.L. |